# EUROPÄISCHE PATENTSCHRIFT

(11) **EP 1 295 063 B1**
(45) Veröffentlichungstag und Bekanntmachung des Hinweises auf die Patenterteilung: **31.08.2005**
(21) Anmeldenummer: 02712746.3
(22) Anmeldetag: 06.02.2002
(51) Int. Cl.: F16L 17/10, F16L 25/00, E21D 9/00, E21D 11/38

(54) **DICHTANORDNUNG UND VERFAHREN ZU IHRER HERSTELLUNG**
SEALING ARRANGEMENT AND METHOD FOR PRODUCING THE SAME
SYSTEME D'ETANCHEITE ET SON PROCEDE DE REALISATION

(30) Priorität: 11.05.2001 DE 10122996
(43) Veröffentlichungstag der Anmeldung: 26.03.2003
(73) Patentinhaber: Phoenix AG, 21079 Hamburg (DE)
(72) Erfinder: FAERBER, Peter, 51371 Leverkusen (DE); HÖFT, Heiko, 21435 Rosengart (DE); SCHLAUTMANN, Frank, 48147 Münster (DE)
(86) Internationale Anmeldenummer: PCT/DE2002/000423
(87) Internationale Veröffentlichungsnummer: WO 2002/093060

(56) Entgegenhaltungen:
- EP-A- 0 479 172
- DE-C- 4 119 305

## Beschreibung

Die Erfindung betrifft eine Dichtanordnung
- einer Rohrmuffe, die aus einem Rohr aus Beton, Stahlbeton oder einem anderen aushärtbaren Material sowie aus einer äußeren Stahlmanschette gebildet ist, wobei die Stahlmanschette im Rohr verankert ist und in Bezug auf die Stirnfläche des Rohres in einem Überstand hinausragt;
- wobei zwischen dem Rohr und der Stahlmanschette wenigstens ein Dichtring aus einem elastomeren Werkstoff eingebaut ist.

Eine Dichtanordnung dieser Art wird vorwiegend bei Vortriebsrohren eingesetzt (DE 199 13 016 A1). Der Dichtring ist dabei zumeist ein Winkelprofil, das in die Stahlmanschette eingeschweißt ist. Das Winkelprofil selbst ist dann vollständig von dem Material des Rohres umgeben. Dadurch wird zwar eine zusätzliche Verankerung erzielt, die Dichtfunktion wird jedoch nur unzureichend erfüllt, zumal bei entsprechender Belastung das Winkelprofil an der Schweißstelle der Stahlmanschette brechen kann. Eine Nachdichtung ist nicht möglich.

Zweckmäßige Ausgestaltungen der Erfindung werkstoffmäßiger und konstruktiver Art sind in den Patentansprüchen 2 bis 6 genannt.

In der Patentschrift DE 41 19 305 C1 wird eine gattungsgemäße Dichtanordnung vorgestellt, bei der der Dichtring aus einem elastomeren Werkstoff besteht. Zwecks Verbesserung der Verformbarkeit des gummielastischen Materials wird dabei vorgeschlagen, den Dichtring mit umlaufenden Hohlräumen zu versehen. Bedingt durch die Tatsache, dass der Dichtring zwischen einem Betonrohr und einer Stahlmanschette eingepresst ist, kommt es jedoch häufig zu einem raschen Materialverschleiß des elastomeren Werkstoffes, verbunden mit einem Nachlassen oder gar Verlustes der Elastizität und somit zu einem Unwirksamwerden der geforderten Dichtleistung. Eine Nachdichtung ist auch hier nicht möglich.

Aus der Offenlegungsschrift EP 0 479 172 A2 ist eine Steckmuffenverbindung bekannt, bei der der Dichtring aus einem elastomerem Werkstoff besteht, der aktivierbar ist. Dabei dichtet der Dichtring den Spalt zwischen Muffe und Spitzende eines Rohres ab, wobei Muffe und Spitzende zumeist aus Beton bestehen. Derartige Dichtkonzepte sind jedoch bislang nur beschränkt zum Einsatz gelangt, da die eingesetzten aktivierbaren Dichtringe ebenfalls häufig einem baldigen Verschleiß unterlagen, so dass eine Nachaktivierung keine wesentliche Wirkung mehr entfalten konnte.

Die Aufgabe der Erfindung besteht nun darin, eine Dichtanordnung der gattungsgemäßen Art bereitzustellen, bei der eine dauerhafte Dichtwirkung unter Einbezug einer Nachdichtung auch unter extremer Belastung der Rohrmuffe gewährleistet ist.

Gelöst wird diese Aufgabe gemäß Kennzeichen des Patentanspruches dadurch, dass
- der Dichtring aktivierbar ist, indem der Dichtring mit wenigstens einem Hohlraum versehen ist, der wiederum mit wenigstens einer Zuleitung verbunden ist, wobei die Aktivierung des Dichtringes durch Zufuhr eines gasförmigen oder flüssigen Mediums erfolgt; und
- der Dichtring mit wenigstens einer Nut ausgestattet ist, wobei die Nut/Nuten der Innenfläche der Stahlmanschette zugewandt ist/sind.

Darüber hinaus besteht die Aufgabe darin, ein Verfahren zur Herstellung der gattungsgemäßen Dichtanordnung bereitzustellen, das den Einbau des Dichtringes unter Erfüllung eines optimalen Sitzes vereinfacht.

Gemäß Kennzeichen des Patentanspruches 7 zeichnet sich nun das Verfahren zur Herstellung der neuen Dichtanordnung durch folgende Verfahrensschritte aus:
- zunächst wird der Dichtring an die Innenfläche der Stahlmanschette angebracht, insbesondere mittels eines Klebemittels;
- dann erfolgt die Herstellung des Rohres mittels der an sich bekannten Verschalungstechnologie im Gussverfahren, wobei nach der Aushärtung des Rohrmaterials der Dichtring in der Rohrmuffe integriert ist.

Vorteilhafterweise wird dabei die Verschalung so durchgeführt, dass der Dichtring nach der Aushärtung des Rohrmaterials vollständig in einer Aufnahmenut des Rohres einsitzt.

Die Erfindung wird nun anhand von Ausführungsbeispielen unter Bezugnahme auf schematische Zeichnungen erläutert. Es zeigen:
- Fig. 1: eine Dichtanordnung einer Rohrmuffe mit aktivierbarem Dichtring;
- Fig. 2: einen Dichtring mit einem Hohlraum und zwei Nuten;
- Fig. 3: einen Dichtring gemäß Fig. 2 mit zusätzlichen Riefen.

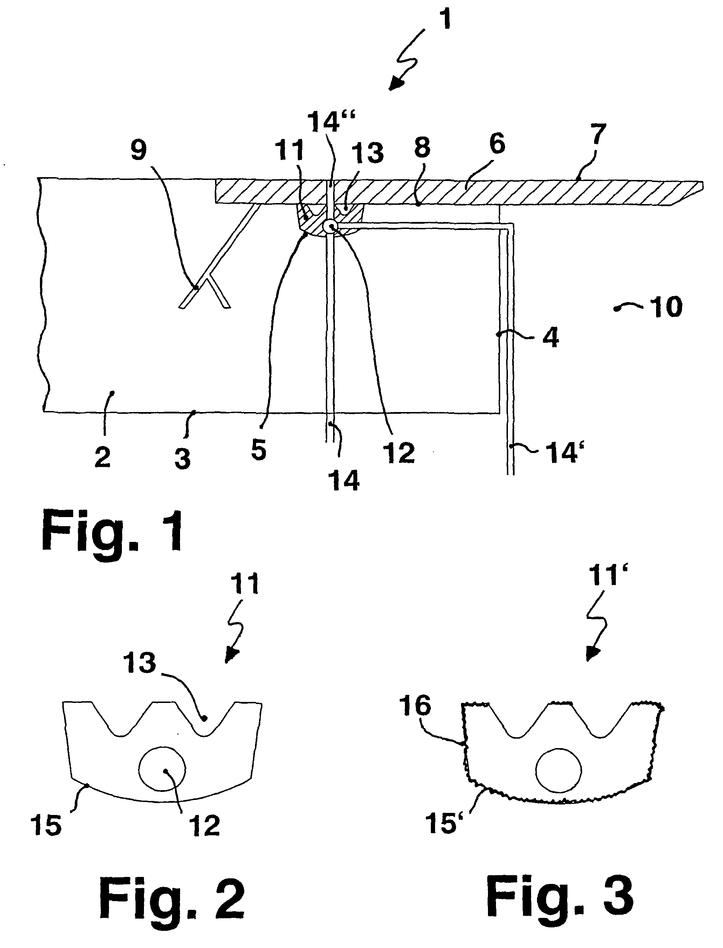

Fig. 1 zeigt eine Dichtanordnung einer Rohrmuffe **1,** die aus einem Rohr **2,** insbesondere Betonrohr, und einer äußeren Stahlmanschette **6** gebildet ist. Die Stahlmanschette ist dabei mittels eines Verankerungsfußes **9** aus Stahl im Rohr fest verankert. Die Muffengestalt wird nun dadurch bewirkt, dass die Stahlmanschette in Bezug auf die Stirnfläche **4** des Rohres in einem Überstand hinausragt, und zwar unter Bildung des Aufnahmeraumes **10** für das Spitzende eines Rohres, insbesondere wiederum in Form eines Betonrohres. Der verbleibende Ringspalt zwischen der Stahlmanschette **6** und dem Spitzende wird zumeist ebenfalls abgedichtet.

Diesbezüglich wird beispielsweise auf die Offenlegungsschrift DE 101 58 155 A1 verwiesen.

Innerhalb der Aufnahmenut **5** des Rohres **2** sitzt nun der aktivierbare Dichtring **11** aus elastomerem Werkstoff vollständig ein, vorzugsweise auf der Basis eines Styrol-Butadien-Kautschuks (SBR) oder eines Ethylen-Proplyen-Dien-Mischpolymerisates (EPDM).

Der Dichtring **11** ist mit wenigstens einem Hohlraum **12** versehen, der wiederum mit wenigstens einer Zuleitung **14, 14', 14"** verbunden ist, wobei die Aktivierung des Dichtringes durch Zufuhr eines gasförmigen oder flüssigen Mediums erfolgt. Der aktivierte Dichtring bewirkt dann eine hohe Dichtleistung.

Der Dichtring **11** ist ferner mit zwei Nuten **13** ausgestattet, die der Innenfläche **8** der Stahlmanschette **6** zugewandt sind. Dadurch wird die Elastizität des Dichtringes verbessert.

Fig. 2 zeigt nochmals in vergrößerter Darstellung den Dichtring **11** mit dem Hohlraum **12** und der beiden Nuten **13,** wobei die Außenkontur **15** im wesentlichen glattflächig ist.

Fig. 3 zeigt einen modifizierten Dichtring **11',** bei dem die Außenkontur **15'** vollständig mit Riefen **16** versehen ist. Auch eine abschnittsweise Anordnung der Riefen ist möglich. Durch diese Riefen wird der Umlaufweg des Dichtringes vergrößert.

Mit der erfindungsgemäßen Dichtanordnung unter Verwendung des aktivierbaren Dichtringes ist jederzeit eine Nachdichtung möglich.

### Bezugszeichenliste

- **1**: Rohrmuffe
- **2**: Rohr
- **3**: Innenfläche des Rohres
- **4**: Stirnfläche des Rohres (Muffenspiegel)
- **5**: Aufnahmenut des Rohres für den Dichtring
- **6**: Stahlmanschette
- **7**: Außenfläche der Stahlmanschette
- **8**: Innenfläche der Stahlmanschette
- **9**: Verankerungsfuß
- **10**: Aufnahmeraum für das Spitzende eines Rohres
- **11**: Dichtring
- **11'**: Dichtring
- **12**: Hohlraum (Aktivierungsraum)
- **13**: Nut/Nuten des Dichtringes
- **14**: Zuleitung an der Innenfläche des Rohres
- **14'**: Zuleitung an der Stirnfläche des Rohres
- **14"**: Zuleitung an der Außenfläche der Stahlmanschette
- **15**: Außenkontur des Dichtringes
- **15'**: Außenkontur des Dichtringes
- **16**: Riefen

## Patentansprüche

1. Dichtanordnung
- einer Rohrmuffe (1), die aus einem Rohr (2) aus Beton, Stahlbeton oder einem anderen aushärtbaren Material sowie aus einer äußeren Stahlmanschette (6) gebildet ist, wobei die Stahlmanschette im Rohr verankert ist und in Bezug auf die Stirnfläche (4) des Rohres in einem Überstand hinausragt;
- wobei zwischen dem Rohr (2) und der Stahlmanschette (6) wenigstens ein Dichtring (11, 11') aus einem elastomeren Werkstoff eingebaut ist;
**dadurch gekennzeichnet, dass**
- der Dichtring (11, 11') aktivierbar ist, indem der Dichtring mit wenigstens einem Hohlraum (12) versehen ist, der wiederum mit wenigstens einer Zuleitung (14, 14', 14") verbunden ist, wobei die Aktivierung des Dichtringes durch Zufuhr eines gasförmigen oder flüssigen Mediums erfolgt; und
- der Dichtring (11, 11') mit wenigstens einer Nut (13) ausgestattet ist, wobei die Nut/Nuten der Innenfläche (8) der Stahlmanschette (6) zugewandt ist/sind.

2. Dichtanordnung nach Anspruch 1, **dadurch gekennzeichnet, dass** der Dichtring (11, 11') aus einem elastomeren Werkstoff auf Basis SBR oder EPDM besteht.

3. Dichtanordnung nach Anspruch 1 oder 2, **dadurch gekennzeichnet, dass** der Dichtring (11, 11') in einer Aufnahmenut (5) des Rohres (2) vollständig einsitzt.

4. Dichtanordnung nach einem der Ansprüche 1 bis 3, **dadurch gekennzeichnet, dass** die Zuleitung (14, 14' 14") an der Innenfläche (3) und/oder Stirnfläche (4) des Rohres (2) und/oder an der Außenfläche (7) der Stahlmanschette (6) angebracht ist.

5. Dichtanordnung nach einem der Ansprüche 1 bis 4, **dadurch gekennzeichnet, dass** der Dichtring (11, 11') mit zwei Nuten (13), ausgestattet ist.

6. Dichtanordnung nach einem der Ansprüche 1 bis 5, **dadurch gekennzeichnet, dass** der Dichtring (11') an seiner Außenkontur (15') mit Riefen (16) versehen ist, die die Außenkontur vollständig oder abschnittsweise erfassen.

7. Verfahren zur Herstellung einer Dichtanordnung mit dem Aufbau nach einem der Ansprüche 1 bis 6, **gekennzeichnet durch** folgende Verfahrensschritte:
- zunächst wird der Dichtring (11, 11') an die Innenfläche (8) der Stahlmanschette (6) angebracht, insbesondere mittels eines Klebemittels;
- dann erfolgt die Herstellung des Rohres (2) mittels der an sich bekannten Verschalungstechnologie im Gussverfahren, wobei nach der Aushärtung des Rohrmaterials der Dichtring (11, 11') in der Rohrmuffe (2) integriert ist.

8. Verfahren nach Anspruch 7 in Verbindung mit Anspruch 3, **dadurch gekennzeichnet, dass** die Verschalung so durchgeführt wird, dass der Dichtring (11, 11') nach der Aushärtung des Rohrmaterials vollständig in einer Aufnahmenut (5) des Rohres (2) einsitzt.

## Claims

1. Sealing arrangement for a pipe connection (1) which is formed of a pipe (2) made of concrete, reinforced concrete or another hardening material, and of an outer steel sleeve (6), the steel sleeve being anchored in the pipe and projecting in the form of an overhang in relation to the end face (4) of the pipe, wherein at least one sealing ring (11, 11') made of an elastomer material is fitted between the pipe (2) and the steel sleeve (6), **characterised in that**
- the sealing ring (11,11') can be activated **in that** the sealing ring is provided with at least one hollow chamber (12) which in turn is connected to at least one line (14, 14', 14"), the sealing ring being activated by introducing a gaseous or liquid medium, and
- the sealing ring (11, 11') is provided with at least one groove (13), the groove/grooves facing the inside face (8) of the steel sleeve (6).

2. Sealing arrangement according to claim 1, **characterised in that** the sealing ring (11, 11') is made of an elastomer material based on SBR or EPDM.

3. Sealing arrangement according to claim 1 or 2, **characterised in that** the sealing ring (11, 11') is seated completely in a receiving groove (5) in the pipe (2).

4. Sealing arrangement according to one of claim 1 to 3, **characterised in that** the line (14, 14', 14") is attached to the inside face (3) and/or end face (4) of the pipe (2) and/or to the outside face (7) of the steel sleeve (6).

5. Sealing arrangement according to one of claims 1 to 4, **characterised in that** the sealing ring (11, 11') is provided with two grooves (13).

6. Sealing arrangement according to one of claims 1 to 5, **characterised in that** on its outside contour (15') the sealing ring (11') is provided with grooves (16) which cover the outside contour completely or in sections.

7. Method for producing a sealing arrangement with the structure according to one of claims 1 to 6, **characterised by** the following steps:
- first the sealing ring (11, 11') is attached to the inside face (8) of the steel sleeve (6), in particular by means of an adhesive;
- then the pipe (2) is produced by casting by means of the formwork technology known per se, and after the pipe material has hardened, the sealing ring (11, 11') is incorporated in the pipe connection (2).

8. Method according to claim 7 in conjunction with claim 3, **characterised in that** the formwork is carried out so that the sealing ring (11, 11') is seated completely in a receiving groove (5) in the pipe (2) after the pipe material has hardened.

## Revendications

1. Dispositif d'étanchéité
- d'un manchon tubulaire (1), formé d'un tube (2) en béton, en béton armé ou en un autre matériau durcissable, ainsi que d'une manchette en acier (6) extérieure, la manchette en acier étant ancrée dans le tube et sortant avec un certain dépassement, par rapport à la face frontale (4) du tube;
- où, entre le tube (2) et la manchette en acier (6), est intégrée au moins une bague d'étanchéité (11,11') réalisée en un matériau élastomère;
**caractérisé en ce que**
- la bague d'étanchéité (11,11') est activable, par le fait que la bague d'étanchéité est munie d'au moins un espace creux (12), relié à son tour à au moins une conduite d'amenée (14,14',14"), l'activation de la bague d'étanchéité s'effectuant par apport d'un fluide gazeux ou liquide; et
- la bague d'étanchéité (11,11') est munie d'au moins une gorge (13), où la gorge/les gorges est/sont tournée(s) vers la face intérieure (8) de la manchette en acier (6).

2. Dispositif d'étanchéité selon la revendication 1, **caractérisé en ce que** la bague d'étanchéité (11,11') est formée d'un matériau élastomère, à base de SBR ou d'EPDM.

3. Dispositif d'étanchéité selon la revendication 1 ou 2, **caractérisé en ce que** la bague d'étanchéité (11,11') est montée en totalité dans une gorge de logement (5) du tube (2).

4. Dispositif d'étanchéité selon l'une des revendications 1 à 3, **caractérisé en ce que** la conduite d'amenée (14,14',14") est montée sur la face intérieure (3) et/ou la face frontale (4) du tube (2) et/ou sur la face extérieure (3) de la manchette en acier (6).

5. Dispositif d'étanchéité selon l'une des revendications 1 à 4, **caractérisé en ce que** la bague d'étanchéité (11,11') est équipée de deux gorges (13).

6. Dispositif d'étanchéité selon l'une des revendications 1 à 5, **caractérisé en ce que** la bague d'étanchéité (11') est munie, sur son contour extérieur (15'), de cannelures (16) couvrant, en totalité ou par tronçons, le contour extérieur.

7. Procédé de fabrication d'un dispositif d'étanchéité présentant la structure selon l'une des revendications 1 à 6, **caractérisé par** les étapes de procédé suivantes :
- d'abord, la bague d'étanchéité (11,11') est montée sur la face intérieure (8) de la manchette en acier (6), en particulier à l'aide d'un moyen adhésif;
- ensuite, la fabrication du tube (2) est effectuée par la technologie de coffrage connue en soi, dans un procédé de coulée, sachant que, après durcissement du matériau de tube, la bague d'étanchéité (11,11') est intégrée dans le manchon tubulaire (2).

8. Procédé selon la revendication (7) en liaison avec la revendication (3), **caractérisé en ce que** le coffrage est effectué de manière que la bague d'étanchéité (11,11') se place complètement dans une gorge de logement (5) du tube (2), après durcissement du matériau du tube.
